# EUROPEAN PATENT SPECIFICATION

(11) **EP 1 753 801 B1**
(45) Date of publication and mention of the grant of the patent: **30.07.2008**
(21) Application number: 05731201.9
(22) Date of filing: 18.03.2005
(51) Int. Cl.: C08G 59/68

(54) **CATALYST FOR CURING EPOXY RESINS, EPOXY RESIN COMPOSITION, AND POWDER COATING COMPOSITION**
KATALYSATOR ZUM HÄRTEN VON EPOXIDHARZEN, EPOXIDHARZZUSAMMENSETZUNG UND PULVERLACKZUSAMMENSETZUNG
CATALYSEUR DURCISSANT LES RESINES EPOXY, COMPOSITION DE RESINES EPOXY, ET COMPOSITION DE REVETEMENT EN POUDRE

(30) Priority: 21.05.2004 US 851893
(43) Date of publication of application: 21.02.2007
(73) Proprietor: General Electric Company, Schenectady, NY 12345 (US)
(72) Inventor: KOENIGER, Rainer, Clifton Park, NY 12065 (US); BRUNELLE, Daniel, Joseph, Burnt Hills, NY 12027 (US); MOLAISON, Chris, Anthony, Albany, NY 12202 (US)
(74) Representative: Modiano, Micaela Nadia
(86) International application number: PCT/US2005/009175
(87) International publication number: WO 2005/118670

(56) References cited:
- US-A- 3 261 809
- US-A- 3 308 094
- US-A- 5 556 937
- US-A- 5 907 025

## Description

### BACKGROUND OF INVENTION

Thermosetting epoxy resins exhibit excellent properties of toughness, corrosion resistance, and chemical resistance, as well as low cost. The properties make these resins ideal as coating materials in a variety of applications such as automotive coatings, building materials, and household electronic appliances. Advantageously, the epoxy resins have applicability as environmentally friendly powder coatings because they contain no organic solvents.

Known epoxy resin powder coating compositions contain an epoxy resin, a resin that has carboxylic or phenolic groups as the primary end groups and a further resin such as a polyester, polyether, polyurethane, or acrylate polymer. These types of powder coatings require a baking process at high temperatures and for extended periods of time for sufficient cure. The problem of elevated temperatures of the baking step has been met by the addition of a curing catalyst to the powder coatings, which allows for a lower baking temperature. Examples of curing catalysts that have been used for powder coatings include imidazoles, metal salt complexes, ammonium salts, and phosphonium salts.

There remains a need for more highly active catalysts for the curing of epoxy resins and powder coating compositions containing epoxy resins to yet further lower the curing temperature. There also remains a need for improved epoxy resin compositions, and for improved powder coating compositions.

### BRIEF DESCRIPTION OF THE INVENTION

One embodiment is a curable composition comprising an epoxy resin and a catalytic amount of a hexahydrocarbylguanidinium salt.

In another embodiment, a curable composition comprises 100 parts by weight epoxy resin; about 2 to about 5000 parts by weight hardener; and 0.01 to about 20 parts by weight of a hexahydrocarbylguanidinium salt having the formula 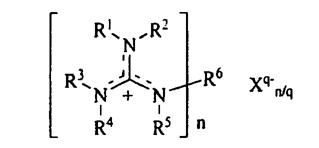 wherein R¹, R², R³, R⁴, and R⁵ are each independently C₁-C₁₂ hydrocarbyl, R⁶ is C₁-C₁₂ hydrocarbyl or C₁-C₁₂ hydrocarbylene, or wherein the combination of any two of R¹, R², R³, R⁴, R⁵, and R⁶ join to form a five or six-member heterocycle with the connecting nitrogen atom or nitrogen-carbon-nitrogen atoms; X^{q-} is an anion or dianion; and n is 1 or 2.

In yet another embodiment, a powder coating composition comprises an epoxy resin; a catalytic amount of a hexahydrocarbylguanidinium salt; a hardener; and an additional resin selected from the group consisting of polyester resins, phenolic resins, alkyd resins, melamine resins, fluorinated resins, vinyl chloride resins, acrylic resins, silicone resins, and combinations thereof.

A further embodiment is a method of preparing a powder coating composition comprising melt-mixing an epoxy resin, a hardener, and a catalytic amount of hexahydrocarbylguanidinium salt having the formula 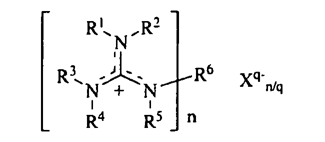 wherein R¹, R², R³, R⁴, and R⁵ are each independently C₁-C₁₂ hydrocarbyl, R⁶ is C₁-C₁₂ hydrocarbyl or C₁-C₁₂ hydrocarbylene, or wherein the combination of any two of R¹, R², R³, R⁴, R⁵, and R⁶ join to form a five or six-member heterocycle with the connecting nitrogen atom or nitrogen-carbon-nitrogen atoms; X^{q-} is an anion or dianion; and n is 1 or 2, to form a mixture; cooling the mixture to form a cooled mixture; and pulverizing the cooled mixture to form a powder coating composition.

Other embodiments, including a cured composition comprising the reaction product obtained by curing the curable composition and articles prepared from the cured composition, are described in detail below.

### DETAILED DESCRIPTION

It has been found that hexahydrocarbylguanidinium salt is an excellent curing catalyst in the promotion of epoxide resin cure. The hexahydrocarbylguanidinium salt has been found to improve the rate of reaction of cure of the epoxy resin compositions. When used in epoxy resin powder coatings, the hexahydrocarbylguanidinium salt also improves the rate of reaction of cure of the powder coatings.

The terms "a" and "an" herein do not denote a limitation of quantity, but rather denote the presence of at least one of the referenced item. All ranges disclosed herein are inclusive and combinable.

The hexahydrocarbylguanidinium salt useful as the curing catalyst includes compounds having the formula (I) 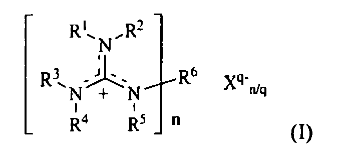 wherein R¹, R², R³, R⁴, and R⁵ are each independently C₁-C₁₂ hydrocarbyl, R⁶ is C₁-C₁₂ hydrocarbyl or C₁-C₁₂ hydrocarbylene, or wherein the combination of any two of R¹, R², R³, R⁴, R⁵, and R⁶ join to form a five or six-member heterocycle with the connecting nitrogen atom or nitrogen-carbon-nitrogen atoms; X^{q-} is an anion or dianion; and n is 1 or 2. As is indicated by the dotted bonds in formula (I), the positive charge in the hexahydrocarbylguanidinium salt is delocalized over one carbon atom and three nitrogen atoms.

As used herein, "hydrocarbyl" and "hydrocarbylene" refer to a residue that contains only carbon and hydrogen. The residue may be aliphatic or aromatic, straight-chain, cyclic, bicyclic, branched, saturated, or unsaturated. It may also contain combinations of aliphatic, aromatic, straight chain, cyclic, bicyclic, branched, saturated, and unsaturated hydrocarbon moieties. The hydrocarbyl or hydrocarbylene residue, when so stated however, may contain heteroatoms over and above the carbon and hydrogen members of the substituent residue. Thus, when specifically noted as containing such heteroatoms, the hydrocarbyl or hydrocarbylene residue may also contain carbonyl groups, amino groups, hydroxyl groups, or the like, or it may contain heteroatoms within the backbone of the hydrocarbyl or hydrocarbylene residue.

The R¹, R², R³, R⁴, and R⁵ may each independently be C₁-C₁₂ hydrocarbyl, more specifically a C₂-C₆ hydrocarbyl. The R⁶ may be a C₁-C₁₂ hydrocarbyl and more specifically a C₂-C₆ hydrocarbyl. The R⁶ may also be a C₂-C₁₂ hydrocarbylene and more specifically a C₄-C₈ hydrocarbylene. Alternatively, any combination of two R¹, R², R³, R⁴, R⁵, and R⁶ may join to form a five or six-member heterocycle with the connecting nitrogen atom or nitrogen-carbon-nitrogen atoms. For example, the combination of R¹ and R² and the combination of R³ and R⁴ may each independently form a five or six-member heterocycle with the connecting nitrogen atom. Other exemplary combinations include the combination of R¹ and R³ and the combination of R⁴ and R⁵ may join to form a heterocycle containing the nitrogen-carbon-nitrogen moiety of the guanidinium core. Suitable heterocycles include, for example, piperidino, pyrrolo, and morpholino.

The X^{q-} group of formula (I) may be an anion or dianion and more specifically an anion or dianion of a strong acid. Exemplary anions where q is 1 include halides such as chloride and bromide; hydrocarbylsulfonates, such as methanesulfonate and toluene sulfonate; and C₁-C₁₂ hydrocarbylsulfate, such as methyl sulfate and ethyl sulfate. Exemplary dianions where q is 2 include sulfate. The value of n will be 1 or 2 depending on whether R⁶ is hydrocarbyl or hydrocarbylene, respectively. Exemplary hexahydrocarbylguanidinium salts include hexaethylguanidinium bromide; 1,6-bis(N,N',N',N",N"-penta-n-butylguanidinium)hexane dibromide; 1,6-bis(N-n-butyl-N',N',N",N"-tetraethylguanidinium)hexane dibromide; and the like.

The hexahydrocarbylguanidinium salt can be prepared by the reaction of a tetraalkylurea or heterocyclic analog thereof with phosgene or phosphorus oxychloride, or by the reaction of a corresponding thiourea with an N,N-dialkylcarbamoyl halide, to yield a chloroformamidinium salt, frequently referred to as a "Vilsmeier salt", followed by reaction of the salt with a dialkylamine. Exemplary synthetic procedures may be found in Kantlehner et al., Liebigs Ann. Chem., 108-126, (1984) and Pruszynski, Can. J. Chem. 65, 626-629 (1987). α,ω-Bis(pentaalkylguanidinium)alkane salts may be similarly prepared by the reaction of the chloroformamidinium salt with a monoalkylamine, followed by reaction of the resulting pentaalkylguanidinium salt with an alkylene dihalide. Such salts are disclosed in United States Patent No. 5,116,975 to Brunelle.

The amount of hexahydrocarbylguanidinium salt present in the curable composition may be in an amount sufficient to catalyze the curing of the epoxy resin and optional hardener and/or optional additional curable monomer, oligomer, or resin that may be present therein. Amounts of hexahydrocarbylguanidinium salt may be about 0.01 to about 20 parts by weight, more specifically about 0.1 to about 10 parts by weight, and yet more specifically about 0.5 to about 5 parts by weight with respect to 100 parts by weight of the epoxy resin.

The epoxy resins that may be used in the curable composition include any epoxy resin having, on average, greater than one epoxy group per molecule. Examples of such epoxy resins include reaction products of epichlorohydrin and a second compound. Suitable second compounds include novolac phenolic resins; bisphenol epoxy resins (type A, type B, type F, etc.); the combination of novolac phenolic resins and bisphenol epoxy resins (type A, type B, type F, etc.); cresol compounds, such as cresol novolac; diols, for example, ethylene glycol, propylene glycol, 1,4-butanediol, polyethylene glycol, polypropylene glycol, and neopentyl glycol; triols such as trimethylolpropane and glycerol; tetraols such as pentaerythritol; carboxylic acids, such as succinic acid, adipic acid, sebacic acid, phthalic acid, terephthalic acid, hexahydrophthalic acid, and trimellitic acid; and hydroxycarboxylic acids, for example, p-oxybenzoic acid and p-oxynaphthoic acid.

Other epoxy resins that may be used are the reaction products of novolac phenolic resins and bisphenol epoxy resins (type A, type B, type F, etc.). Also included are alicyclic epoxy compounds, such as 3,4-epoxy-6-methylcyclohexylmethyl-3,4-epoxy-6-methylcyclohexanecarboxylate, 3,4-epoxycyclohexylmethyl(3,4-epoxycyclohexane)carboxylate, and combinations thereof. Still other epoxy resins are polyaddition polymers prepared from glycidyl (meth)acrylate. The epoxy resin may be triglycidyl isocyanurate, derivatives thereof, and the like. The foregoing epoxy resins may be used alone or in combination.

The epoxy resin preferably has an epoxy equivalent weight in the range of 80 to 2000 and more preferably 90 to 1,000. "Epoxy Equivalent Weight" as used herein means the mass of an epoxy resin divided by the number of moles of reactive epoxy equivalents (epoxy or oxirane groups) in that mass. Units are often expressed as grams/mole equivalent.

The curable composition further comprises a hardener in addition to the epoxy resin and hexahydrocarbylguanidinium salt. Any known hardener that can react with the epoxy resin to form crosslinks may be used. The amount of epoxy resin in the curable composition may be about 0.01 to about 30, more specifically about 0.1 to about 20, and yet more specifically about 0.5 to about 10 based on mole percent with respect to the hardener functionality.

Exemplary hardeners include hydrocarbyl amines, including aliphatic amines and alicyclic amines such as, for example, bis(4-aminocyclohexyl)methane, bis(aminomethyl)cyclohexane, m-xylenediamine, and 3,9-bis(3-aminopropyl)-2,4,8,10-tetraspiro[5,5]undecane; aromatic amines such as, for example, metaphenylene diamine, diaminodiphenylmethane, and diaminodiphenyl sulfone; and tertiary amines and corresponding salts, for example benzyldimethylamine, 2,4,6-tris(dimethylaminomethyl) phenol, 1,8-diazabicyclo(5,4,0)undecene-7,1,5-diazabicyclo (4,3,0)nonene-7.

Other hardeners include anhydride compounds including aromatic acid anhydrides, for example phthalic anhydride, trimellitic anhydride, and pyromellitic anhydride; and alicyclic carboxylic anhydrides, for example succinic anhydride, glutaric anhydride, maleic anhydride, tetrahydrophthalic anhydride, methyltetrahydrophthalic anhydride, hexahydrophthalic anhydride, methylhexahydrophthalic anhydride, methylendomethylenetetrahydrophthalic anhydride, dodecenylsuccinic anhydride, and trialkyltetrahydrophthalic anhydrides. Still other hardeners include polyvalent phenols such as catechol, resorcinol, hydroquinone, bisphenol F, bisphenol A, bisphenol S, biphenol, phenol novolac compounds, cresol novolac compounds, novolac compounds of divalent phenols such as bisphenol A, trishydroxyphenylmethane, hydrocarbylpolyphenols, and dicyclopentadiene polyphenols.

Other exemplary hardeners include imidazoles and salts thereof, such as 2-methylimidazole, 2-ethyl-4-methylimidazole, and 2-phenylimidazole; boron trifluoride (BF₃) complexes of amine; Bronsted acids, including aliphatic sulfonium salts and aromatic sulfonium salts; dicyandiamide; organic acid hydrazides, such as adipic acid dihydrazide and phthalic acid dihydrazide; resols; polycarboxylic acids, such as adipic acid, sebacic acid, terephthalic acid, trimellitic acid, and polyester resins containing carboxylic groups; and organic phosphines, such as triphenylphosphine. The hardener may be used alone or in combination.

In one embodiment, the polyester resin containing carboxylic acid groups can be used as the hardener in the curable compositions, and especially for use in the powder coating compositions. Powder coatings comprising epoxy resin and polyester resin containing carboxylic acid groups exhibit a good balance between reactivity, adhesiveness, corrosion resistance, and physical properties.

The polyester resin containing carboxylic acid groups can generally be prepared from a polyvalent carboxylic acid and a polyol. Examples of suitable polyvalent carboxylic acids include succinic acid, glutaric acid, adipic acid, sebacic acid, azelaic acid, maleic acid, phthalic acid, terephthalic acid, isophthalic acid, hexahydroterephthalic acid, hexahydroisophthalic acid, 2,6-naphthalenedicarboxylic acid, 2,7-naphthalenedicarboxylic acid, 1,2,4-benzenetricarboxylic acid, 1,3,5-benzenetricarboxylic acid, dodecanedicarboxylic acid, and 1,4-cyclohexanedicarboxylic acid; corresponding esters and acid anhydrides; lactones, such as γ-butyrolactone and ε-caprolactone, and corresponding hydroxycarboxylic acids; and aromatic oxymonocarboxylic acids, such as p-oxyethoxybenzoic acid.

Examples of suitable polyols include ethylene glycol, 1,3-propylene glycol, 1,2-propylene glycol, 1,4-butylene glycol, 1,5-pentane-diol, 1,6-hexane diol, neopentyl glycol, 1,8-octane-diol, 1,9-nonane-diol, diethylene glycol, triethylene glycol, dipropylene glycol, tripropylene glycol, homopolymers and copolymers of ethylene glycol and propylene glycol, cyclohexane-1,4-diol, cyclohexane-1,4-dimethanol, dimer acid diols, trimethylolpropane, glycerin, pentaerythritol, hexanetriol, N,N,N',N'-tetrakis(2-hydroxypropyl)ethylenediamine, catechol, resorcinol, ethylene oxide adduct of bisphenol A, and propylene oxide adduct of bisphenol A. Dimer acid diols are generally described in United States Patent Nos. 5,102,979 to Miki et al. and 5545692 to Kohler et al.

Other suitable polyols comprising amide bonds may be used to prepare the polyester comprising carboxylic acid groups. Examples of such polyols include those prepared from diamines such as hexamethylenediamine, xylenediamine, isophoronediamine; triamines; and aminoalcohols, such as monoethanolamine and triisopropanolamine. The amines may be used alone or in combination.

Polyester resin containing carboxylic acid groups and preparations thereof can be found in United States Patent Nos. 3,966,836 to De Cleur et al.; 3,523,143 to Kwong; 3,624,180 to Schmid et al.; 5,596,037 to Moens et al.; and 5,439,988 to Moens et al.

The acid value of the polyester resin comprising carboxylic acid groups may be about 5 to about 800 milligrams of potassium hydroxide per gram (mgKOH/g), specifically about 10 to about 500 mgKOH/g, and more specifically about 20 to about 250 mgKOH/g.

The amount of the hardener that is present in the curable composition may be about 2 to about 5000 parts by weight, specifically about 5 to about 4000 parts by weight, and more specifically about 10 to about 2000 parts by weight with respect to 100 parts by weight of the epoxy resin.

When the polyester resin comprising carboxylic acid groups is used in the curable compositions, the molar ratio of the carboxylic acid groups of the polyester resin to the epoxy groups of the epoxy resin may be about 0.03 to about 100, specifically about 0.05 to about 10, and more specifically about 0.1 to about 3.

The curable compositions may further comprise one or more additives, such as for example, pigments, dyes, degassing agents, flame retardants, anti-sagging agents, thickening agents, surface controlling agents, ultraviolet absorbers, light stabilizers, antioxidants, and reinforcing agents. Such additives may be compounded with the other components of the composition or added to the prepared composition.

Examples of suitable pigments include color pigments, such as titanium dioxide, iron oxide red, iron oxides, powdered zinc, carbon black, phthalocyanine blue, quinacridone pigments, azo pigments, isoindolinone pigments, and various calcined pigments; and extending pigments, such as silica, talc, barium sulfate, calcium carbonate, and glass flake. Examples of suitable pigments and dyes known to the art include those described in the chapter "Colorants" in "Plastic Additives Handbook, 5th Edition" R. Gachter and H. Muller (eds.), P.P. Klemchuck (assoc. ed.) Hansen Publishers, New York 1993.

The curable epoxy resin composition may be used as a powder coating composition. Such powder coating compositions generally comprise epoxy resin, hexahydrocarbylguanidinium salt, and a hardener. The composition may further contain one or more curable monomer, oligomer, and/or synthetic resin, which may be chosen to provide desired physical properties of the resulting, cured material. Exemplary synthetic resins include phenolic resins, alkyd resins, melamine resins, fluorinated resins, vinyl chloride resins, acrylic resins, silicone resins, and polyester resins.

In one embodiment, a method of preparing a powder coating composition comprises compounding an epoxy resin, a hardener, hexahydrocarbylguanidinium salt, and optional additives followed by melt-mixing with rollers, a kneader, or an extruder at a predetermined temperature and predetermined time so as to avoid thickening and gelation. The melt-mixed material is then cooled, pulverized, and then classified to a desired particle distribution. In general, the average particle size of the powder coating composition may be about 0.1 to about 500 micrometers, more specifically about 1 to about 300 micrometers, and yet more specifically about 5 to about 150 micrometers.

The powder coating composition may optionally contain a flow improver by external addition to improve surface quality and gloss of the final coating. Examples of flow modifiers are Modaflow products from Solutia (now UCB). Other flow improvers include co-oligomers of low Tg acrylates such as 2-ethylhexylacrylate, ethyl acrylate, or butyl acrylate; and vinyl polymers and oil derivatives, including DISPARLON products from King Industries.

The powder coating compositions may be applied onto a surface of a substrate using any conventional powder coating deposition technique, such as electrostatic spray, fluidized-bed sintering, or electrostatic fluid-bed sintering, to obtain smooth and uniform coatings. Suitable substrates are, for example, untreated or pretreated metallic substrates, wood, wood materials, plastics, glass, ceramics, or paper.

Curing may be achieved by heating the coated substrate at a temperature for a time sufficient to cure the powder coating composition. Suitable curing temperatures to cure the powder coating composition may be about 60 to about 320 °C, specifically about 90 to about 250 °C, and more specifically about 110 to about 200 °C.

The powder coating composition may used in any application without limitation, for example, corrosion protection and decoration of materials for civil engineering and construction, home electric appliances, heavy electric machines, materials for road construction, steel furniture, automobile parts, sports equipment, and materials for water supply, and powder coating for electrical insulation. Such applications include, for example, automotive, truck, military vehicle, and motorcycle exterior and interior components, including panels, quarter panels, rocker panels, trim, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, roofs and roof tiles, windows, floors, decorative window furnishings or treatments; aluminum extrusions and facades; treated glass covers for pictures, paintings, posters, and like display items; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; computer housings; desktop computer housings; portable computer housings; lap-top computer housings; palm-held computer housings; monitor housings; printer housings; keyboards; FAX machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated photographic film and photographic prints; coated painted articles; coated dyed articles; coated fluorescent articles; coated foam articles; and like applications.

In one embodiment, a cured composition comprises the reaction product obtained by curing the curable composition an epoxy resin and a catalytic amount of a hexahydrocarbylguanidinium salt.

In another embodiment, a cured composition comprises the reaction product obtained by curing the curable composition, comprising: 100 parts by weight epoxy resin; about 2 to about 5000 parts by weight hardener; and 0.01 to about 20 parts by weight of a hexahydrocarbylguanidinium salt having the formula 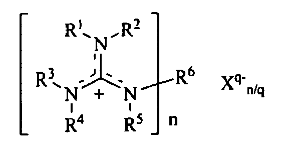 wherein R¹, R², R³, R⁴, and R⁵ are each independently C₁-C₁₂ hydrocarbyl, R⁶ is C₁-C₁₂ hydrocarbyl or C₁-C₁₂ hydrocarbylene, or wherein the combination of any two of R¹, R², R³, R⁴ R⁵, and R⁶ join to form a five or six-member heterocycle with the connecting nitrogen atom or nitrogen-carbon-nitrogen atoms; X^{q-} is any stable anion, preferably, bromide, chloride, toluene sulfonate, or methanesulfonate, and n is 1 or 2.

In yet another embodiment, a cured composition comprises the reaction product obtained by curing the powder coating composition comprising an epoxy resin; a catalytic amount of a hexahydrocarbylguanidinium salt; a hardener; and an additional resin selected from the group consisting of polyester resins, phenolic resins, alkyd resins, melamine resins, fluorinated resins, vinyl chloride resins, acrylic resins, silicone resins, and combinations thereof. The additional resin may be present in an amount of about 0.1 to about 500 parts by weight, more specifically about 5 to about 200 parts by weight, and yet more specifically about 10 to about 100 parts by weight with respect to 100 parts by weight total of the epoxy resin and the hardener.

In yet another embodiment, articles may be prepared from the cured compositions as described herein.

### EXAMPLES

Example 1 (Ex 1) and Comparative Examples 1-8 (CE 1-8) were prepared by premixing the epoxy resin, hardener, and catalyst in a coffee grinder followed by melt-compounding in a 16 millimeter (mm) twin-screw extruder (Prism, barrel length/barrel diameter (L/D) = 25) at 85 °C to 95 °C. Upon exiting the extruder dye, the extrudate was quenched in liquid nitrogen. The extrudate was then ground and dried under vacuum at room temperature. Example 2 (Ex 2) and Comparative

Examples 9-10 (CE 9-10) were prepared according to the procedure above without the addition of the hardener. Table 1 provides the components of the formulations.

**Table 1.**

| Component | Description | Source |
|---|---|---|
| Albester 5160 | Carboxylic-functional polyester | Eastman Chemical |
| TGIC | Triglycidyl isocyanurate | Nissan Chemical |
| EPON 2002 | Bisphenol-A/epichlorohydrin epoxy resin | Resolution Performance Products |
| HEGBr | Hexaethylguanidinium bromide | GE Global Research |
| 2-MI | 2-methyl imidazole | BASF |
| Choline Cl | choline chloride | Synthron Incorporated |
| BTMAC | benzyltrimethylammonium chloride | Aldrich |
| ZnOAc | zinc acetate | Aldrich |
| ZAAH | zinc (2) acetylacetonate hydrate | Aldrich |
| BTMAB | benzyltrimethylammonium bromide | Aldrich |
| Nacure XC B219 | zinc chelate compound | King Industries |

Table 2 contains the epoxy resin formulations based on 2 and 5 mol percent catalyst loadings. The amounts for Ex 1 and CE1-CE8 are in weight percent. The amounts for Ex 2 and CE 9-10 are in parts by weight.

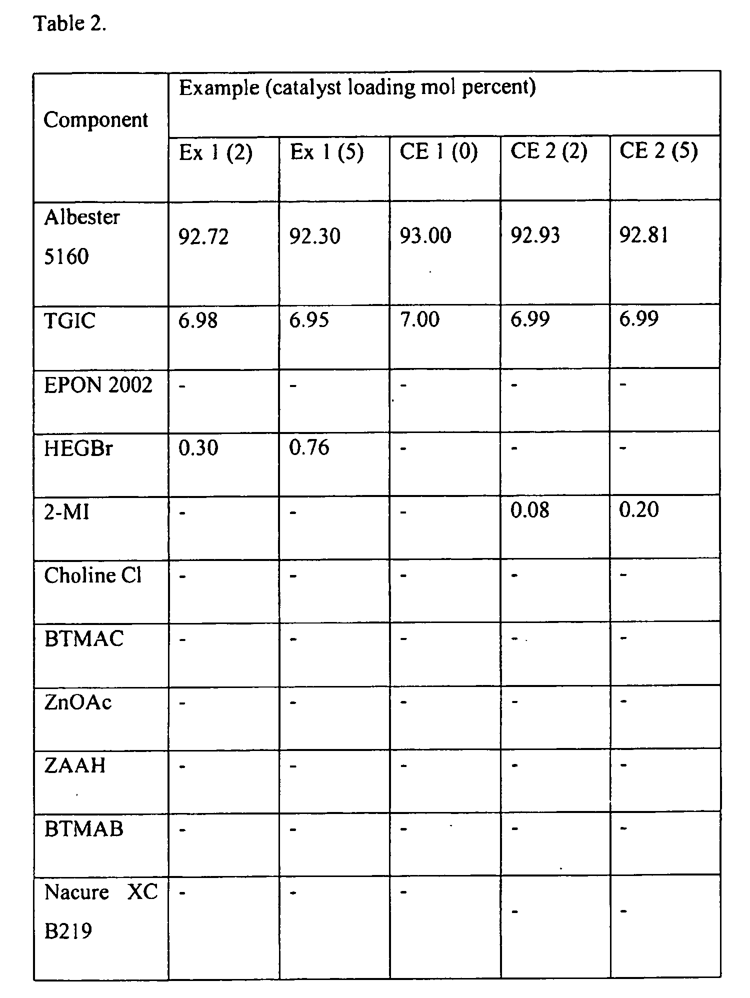

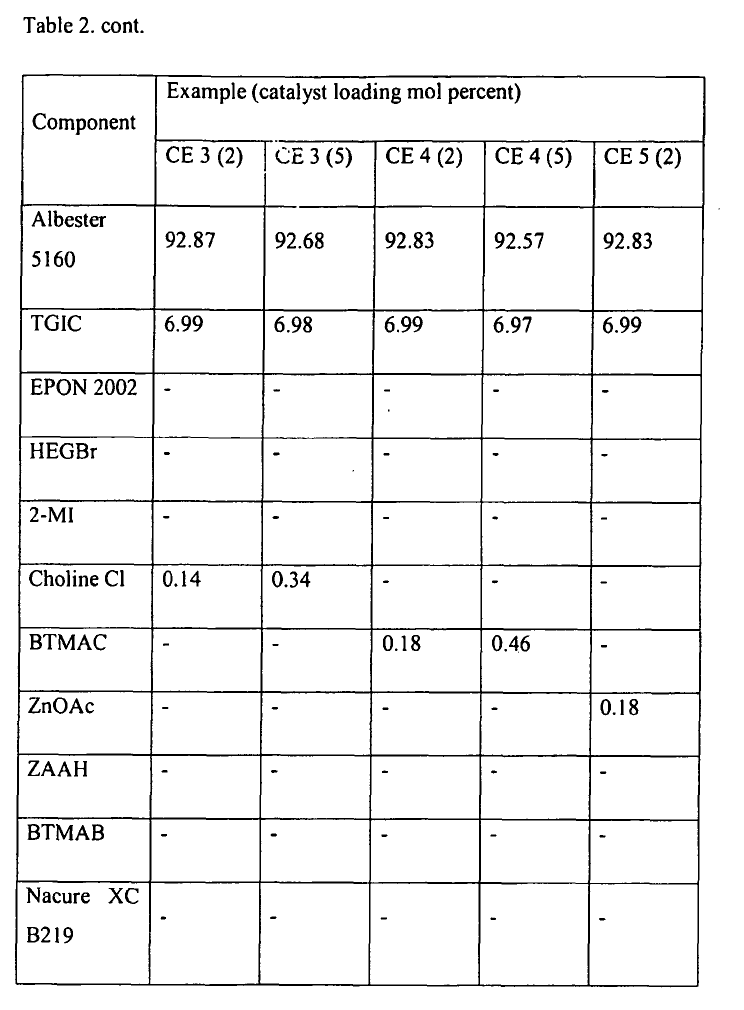

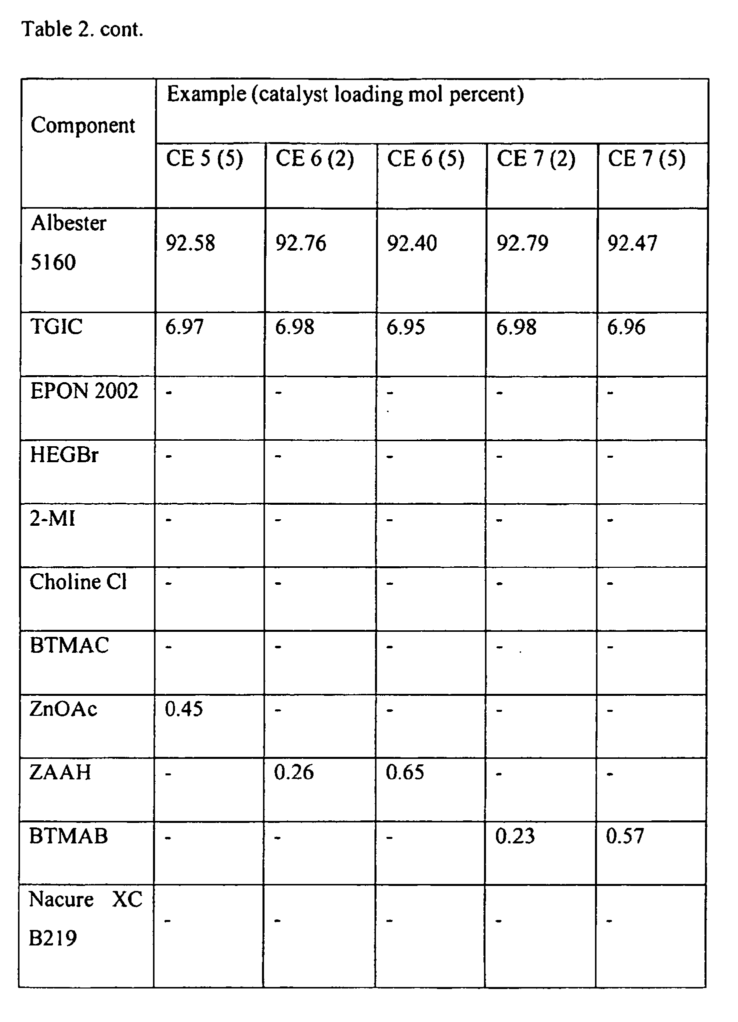

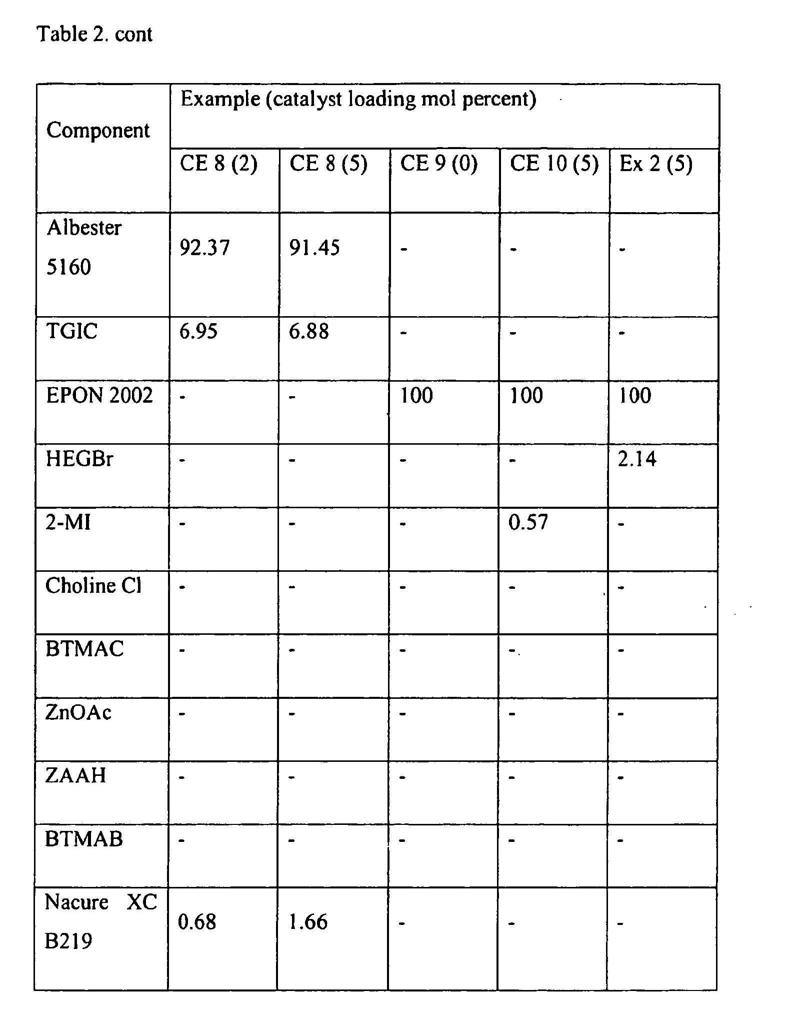

The reaction rates of the epoxy resin formulations outlined in Table 2 were investigated with differential scanning calorimetry (DSC) using a Perkin Elmer DSC 7. The samples prepared from each formulation were 15-20 milligrams (mg) in size. Two isothermal testing protocols were used. The first utilized an isothermal hold at 120°C for 30 minutes followed by a rapid quench and then a temperature scan from 25-300 °C at 10°C/minute. Heat of reaction and the corresponding cured powder conversion curve were obtained from the isothermal portion of the test while the cured network glass transition temperature (T_{g}) and residual heats of reaction were assessed from the follow-up scan. Both heats of reaction were used to calculate the actual conversion at 120 °C in 30 minutes and the slope of the reaction onset was used to calculate the initial reaction rate.

The results of the kinetic measurements are provided in Table 3 including the reaction rate, heat of reaction in Joules per gram (J/g), and conversion. As illustrated in Table 3, the formulations containing hexaethylguanidinium bromide catalyst (Ex 1) exhibited a significant increase in the rate of reaction as well as conversion as compared to the formulations containing the comparative catalysts.

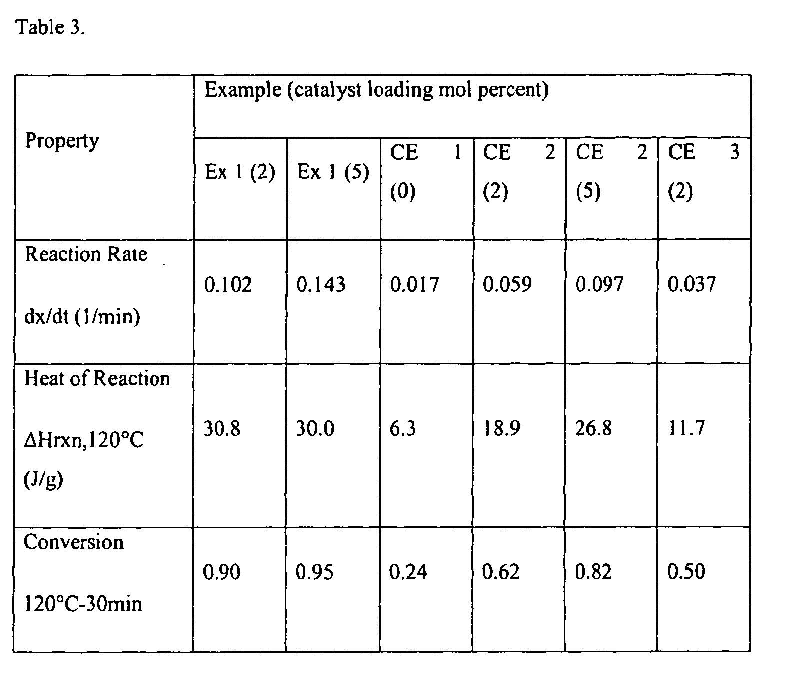

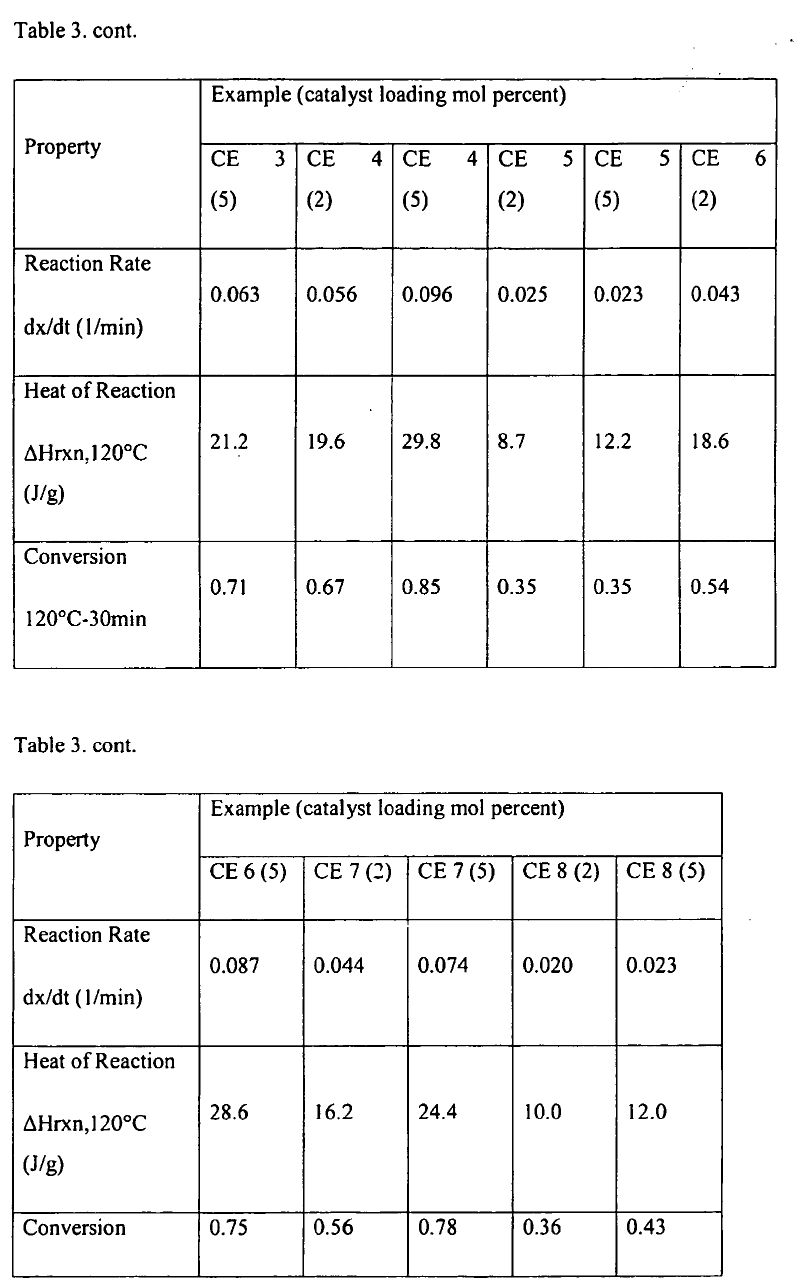

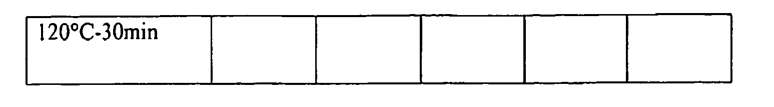

Table 4 contains the heat of reaction for the epoxy resin compositions without a hardener. As the results indicate, the hexaethylguanidinium bromide may also be used as a catalyst to initiate the curing reaction of epoxy resins in the absence of a hardener.

**Table 4.**

| Example | Run | Heat of Reaction ΔHrxn, 30 min, 120°C (J/g) |
|---|---|---|
| CE 9 | 1 | 2.85 |
| | 2 | 3.43 |
| CE 10 | 1 | 69.72 |
| | 2 | 68.75 |
| Ex 2 (5) | 1 | 18.83 |
| | 2 | 11.61 |
| | 3 | 9.139 |
| | Mean | 13.2 |
| | Standard deviation | 5.0 |

## Claims

1. A powder coating composition, comprising:
an epoxy resin;
a catalytic amount of a hexahydrocarbylguanidinium salt;
a hardener; and
an additional resin selected from the group consisting of polyester resins, phenolic resins, alkyd resins, melamine resins, fluorinated resins, vinyl chloride resins, acrylic resins, silicone resins, and combinations thereof.

2. The powder coating composition of claim 1, wherein the additional resin is a polyester resin.

3. The powder coating composition of claim 1, wherein the amount of additional resin is about 0.1 to about 500 parts by weight with respect to 100 parts by weight total of the epoxy resin and the hardener.

4. The powder coating of claim 1, further comprising an additive selected from the group consisting of pigments, degassing agents, flame retardants, anti-sagging agents, thickening agents, surface controlling agents, ultraviolet absorbers, light stabilizers, antioxidants, reinforcing agents, and combinations thereof.

5. A method of preparing a powder coating composition, comprising:
melt-mixing an epoxy resin, a hardener, and a catalytic amount of hexahydrocarbylguanidinium salt having the formula 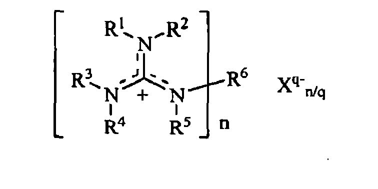
wherein R¹, R², R³, R⁴, and R⁵ are each independently C₁-C₁₂ hydrocarbyl, R⁶ is C₁-C₁₂ hydrocarbyl or C₁-C₁₂ hydrocarbylene, or wherein the combination of any two of R¹, R², R³, R⁴, R⁵, and R⁶ join to form a five or six-member heterocycle with the connecting nitrogen atom or nitrogen-carbon-nitrogen atoms; X^{q-} is an anion or dianion; and n is 1 or 2, to form a mixture;
cooling the mixture to form a cooled mixture; and
pulverizing the cooled mixture to form a powder coating composition.

6. The method of claim 5, further comprising compounding the epoxy resin, hardener, and hexahydrocarbylguanidinium salt to form a compounded mixture prior to melt-mixing.

7. A cured composition comprising the reaction product obtained by curing the powder coating composition of claim 1.

8. An article comprising the cured powder coating composition of claim 7.

## Patentansprüche

1. Eine Pulverbeschichtungszusammensetzung, die folgendes umfaßt:
ein Epoxidharz;
eine katalytische Menge eines Hexahydrocarbylguanidiniumsalzes;
ein Härtungsmittel; und
ein zusätzliches Harz gewählt aus der Gruppe bestehend aus Polyesterharzen, phenolischen Harzen, Alkydharzen, Melaminharzen, fluorierten Harzen, Vinylchloridharzen, Acrylharzen, Silikonharzen, und Kombinationen daraus.

2. Die Pulverbeschichtungszusammensetzung von Anspruch 1, worin das zusätzliche. Harz ein Polyesterharz ist.

3. Die Pulverbeschichtungszusammensetzung von Anspruch 1, worin die Menge des zusätzlichen Harzes ungefähr 0,1 bis ungefähr 500 Gewichtsteile in Bezug auf 100 Gewichtsteile der Zusammensetzung aus dem Epoxidharz und dem Härtungsmittel ausmacht.

4. Die Pulverbeschichtung von Anspruch 1, die weiter einen Zusatzstoff gewählt aus der Gruppe bestehend aus Pigmenten, Entgasungsmitteln, Flammverzögerungsmitteln, Antiablaufmitteln, Verdickungsmitteln, oberflächenkontrollierenden Wirkstoffen, Ultraviolettabsorbern, Lichtstabilisatoren, Antioxidantien, Verstärkungsmitteln und Kombinationen daraus, umfasst.

5. Ein Verfahren zur Herstellung einer Pulverbeschichtungszusammensetzung, das folgendes umfaßt:
Schmelzmischen eines Epoxidharzes, eines Härtungsmittels, und einer katalytischen Menge von Hexahydrocarbylguanidiniumsalz mit der Formel 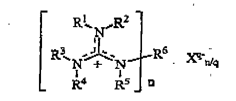
worin R¹, R², R³, R⁴ und R⁵ jeweils unabhängig C₁-C₁₂ Hydrocarbyl sind, R⁶ ist C₁-C₁₂ Hydrocarbyl oder C₁-C₁₂ Hydrocarbylen, oder
worin die Kombination zweier beliebiger von R¹, R², R³, R⁴, R⁵ und R⁶ sich verbinden, um einen fünf- oder sechsgliedrigen Heterocyclus mit dem verbindenden Stickstoffatom oder den Stickstoff-Kohlenstoff-Stickstoffatomen zu bilden; X^{q-} ist ein Anion oder ein Dianion; und n ist 1 oder 2, um eine Mischung zu bilden;
Kühlen der Mischung, um eine gekühlte Mischung zu bilden; und
Pulverisieren der gekühlten Mischung, um eine Pulverbeschichtungszusammensetzung zu bilden.

6. Das Verfahren von Anspruch 5, das weiter das Vermengen des Epoxidharzes, des Härtungsmittels, und des Hexahydrocarbylguanidiniumsalzes umfasst, um eine vermengte Mischung vor dem Schmelzmischen zu bilden.

7. Eine gehärtete Zusammensetzung, die das Reaktionsprodukt, das durch Härten der Pulverbeschichtungszusammensetzung von Anspruch 1 erhalten wird, umfasst.

8. Ein Artikel, der die gehärtete Pulverbeschichtungszusammensetzung von Anspruch 7 umfasst.

## Revendications

1. Composition de revêtement en poudre, comprenant :
une résine époxy ;
une quantité catalytique de sel d'hexahydrocarbylguanidinium ;
un durcisseur ; et
une résine supplémentaire choisie dans le groupe constitué par les résines polyesters, les résines phénoliques, les résines alkydes, les résines mélamines, les résines fluorées, les résines de chlorure de vinyle, les résines acryliques, les résines de silicone et des combinaisons de celles-ci.

2. Composition de revêtement en poudre selon la revendication 1, dans laquelle la résine supplémentaire est une résine polyester.

3. Composition de revêtement en poudre selon la revendication 1, dans laquelle la quantité de résine supplémentaire est d'environ 0,1 à environ 500 parties en poids pour 100 parties en poids total de la résine époxy et du durcisseur.

4. Revêtement en poudre selon la revendication 1, comprenant en outre un additif choisi dans le groupe constitué par les pigments, les agents de dégazage, les retardateurs de flamme, les agents anti-affaissement, les agents épaississants, les agents de contrôle de surface, les absorbeurs d'ultraviolet, les photostabilisants, les antioxydants, les agents renforçants, et des combinaisons de ceux-ci.

5. Procédé de préparation d'une composition de revêtement en poudre, comprenant :
le mélange à l'état fondu d'une résine époxy, d'un durcisseur et d'une quantité catalytique de sel d'hexahydrocarbylguanidinium ayant la formule 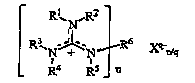
dans laquelle R¹, R², R³, R⁴ et R⁵ sont chacun indépendamment un hydrocarbyle en C₁-C₁₂, R⁶ est un hydrocarbyle en C₁-C₁₂ ou un hydrocarbylène en C₁-C₁₂, ou dans laquelle la combinaison de deux quelconques parmi R¹, R², R³, R⁴, R⁵ et R⁶ se joint pour former un hétérocycle à cinq ou six chaînons avec l'atome d'azote ou les atomes d'azote-carbone-azote de raccord ; X^{q-} est un anion ou un dianion ; et n est 1 ou 2, pour former un mélange ;
le refroidissement du mélange pour former un mélange refroidi ; et
la pulvérisation du mélange refroidi pour former une composition de revêtement en poudre.

6. Procédé selon la revendication 5, comprenant en outre le mélange de la résine époxy, du durcisseur et du sel d'hexahydrocarbylguanidinium pour former un mélange composé avant le mélange à l'état fondu.

7. Composition durcie comprenant le produit de réaction obtenu en durcissant la composition de revêtement en poudre selon la revendication 1.

8. Article comprenant la composition de revêtement en poudre durcie selon la revendication 7.
